# EUROPÄISCHE PATENTSCHRIFT

(11) **EP 3 367 397 B1**
(45) Veröffentlichungstag und Bekanntmachung des Hinweises auf die Patenterteilung: **27.09.2023**
(21) Anmeldenummer: 18157829.5
(22) Anmeldetag: 21.02.2018
(51) Int. Cl.: H01F 27/00

(54) **BETRIEBSMITTELTRAGANORDNUNG**
EQUIPMENT SUPPORT ASSEMBLY
DISPOSITIF DE SUPPORT D'ÉLÉMENT DE FONCTIONNEMENT

(30) Priorität: 24.02.2017 DE 102017103927
(43) Veröffentlichungstag der Anmeldung: 29.08.2018
(73) Patentinhaber: Hitachi Energy Switzerland AG, 5400 Baden (CH)
(72) Erfinder: Rössig, Andreas, 53604 Bad Honnef (DE); Scholl, Ewald-Peter, 53562 St. Katharinen (DE); Schmidt, Thomas, 53579 Erpel (DE)
(74) Vertreter: Epping - Hermann - Fischer

(56) Entgegenhaltungen:
- EP-A1- 0 372 220
- EP-A1- 2 955 729
- EP-A2- 1 300 548
- CH-A5- 657 944
- DE-U1-202013 002 851
- JP-A- H07 192 916
- US-A- 3 377 601
- US-A- 3 841 032
- US-A- 4 505 449

## Beschreibung

Die Erfindung betrifft eine Betriebsmitteltraganordnung für elektrische Betriebsmittel, insbesondere für Transformatoren oder Leistungstransformatoren, Hochspannungs-Leistungstransformatoren, Reaktoren, Leistungstransformatoren mit Phasenverschiebung sowie einen mobilen und "resiliency transformer" und ein Verfahren zur Aufstellung eines Betriebsmittels mittels der Betriebsmitteltraganordnung.

Mobile Transformatoren werden heute aufgrund ihr vielfältigen Einsatzmöglichkeiten vermehrt eingesetzt. Sie sind mobil, nicht an den jeweiligen Einsatzort gebunden, so dass mit ihrer Hilfe sehr schnell ein nicht voll einsatzfähiger beziehungsweise beschädigter Transformator ersetzt werden kann. Das Dokument JP H07 192916 A offenbart ein elektrisches Gerät, wie einen Transformator, das mit Verstärkungsprofilen und einer Hebevorrichtung koppelbar ist, um dieses zum Beispiel in einem Fehlerzustand auswechseln zu können. Mittels der Hebevorrichtung kann der Transformator vom Boden aus betätigt und angehoben werden, um Räder anzubringen, den Transformator bewegen und Räder wieder entfernen zu können.

Ein nicht voll einsatzfähiger Transformator mit ggf. reduzierten Leistungswerten stellt dabei ein ernstzunehmendes Problem dar, da dessen Reparatur durchaus mehrere Wochen bis Monate ja bis zu einem Jahr in Anspruch nehmen kann, wobei während der Wartezeit das Risiko eines Totalausfalls immer weiter ansteigt. Ein Ausfall des Transformators könnte dabei zu erheblichen Folgeschäden, letztlich auch im Hinblick auf das jeweilige Versorgungsnetz, beispielsweise zu Produktionsausfällen und die eingesetzten Geräte führen.

Die Möglichkeit eines schnellen Austauschs eines solchen Transformators, ist dabei von grundlegender Bedeutung auch für die Zuverlässigkeit und Ausfallsicherheit eines Strom-und/oder Versorgungsnetzes.

Der eigentliche Austausch eines solchen defekten Transformators ist dabei jedoch mit einem vergleichsweise großen technischen Aufwand verbunden, und umfasst in Schritten die Entfernung des alten Transformators und/oder dessen Abtransport sowie die Verbringung beziehungsweise Anlieferung des neuen Transformators unter Zuhilfenahme eines geeigneten Transportmittels, wie beispielsweise einen entsprechend eingerichteten Tieflader, an den jeweiligen Einsatzort.

Anschließend ist der Transformator vom jeweiligen Transportmittel abzuladen und am jeweiligen Einsatzort auf einem speziell dafür eingerichteten und befestigten Fundament anzuordnen und aufzustellen. Um dies zu ermöglichen ist aufgrund des hohen Eigengewichtes des jeweiligen Transformators der Einsatz wenigstens eines mobilen Schwerlastkrans erforderlich. Ein solcher Kran ist vergleichsweise groß und dafür eingerichtet die Last des jeweiligen Transformators zu heben und/oder zu bewegen. Weiterhin sind diese terminlich oft nur in einem sehr schmalen Zeitfenster verfügbar. Aufgrund ihrer Größe und ihres Gewichtes können auch sie in aller Regel nur bestimmte Strecken und Straßen befahren, was dazu führen kann, dass sie nicht immer pünktlich am Einsatzort verfügbar sind, was den Transformatoraustausch zusätzlich erschweren und verzögern kann.

Die Aufgabe der Erfindung besteht darin, einen erleichterten vereinfachten Austausch eines elektrischen Betriebsmittels, insbesondere eines Leistungstransformators, welcher die vorgenannten Nachteile vermeidet, zu ermöglichen.

Diese Aufgabe wird durch eine Betriebsmitteltraganordnung gemäß den Merkmalen des Anspruchs 1 gelöst.

Vorteilhafte Ausgestaltungen und Weiterbildungen der Erfindung sind in weiteren Ansprüchen und der nachfolgenden Beschreibung angegeben.

Die erfindungsgemäße Betriebsmitteltraganordnung umfasst dabei am Betriebsmittel selbst lösbar seitlich anordnenbare Haltemittel, sowie eine Stützanordnung mit mehreren Lastaufnehmern, sog. "load stabilizers", insbesondere vier säulenartig ausgebildete Stützfüße, wobei das jeweilige elektrische Betriebsmittel, insbesondere ein Transformator oder Leistungstransformator, in Endposition mit den Haltemitteln auf den Lastaufnehmern abgesetzt ist und/oder nach dem Absetzen zumindest teilbereichsweise zwischen den Lastaufnehmern ruht und angeordnet ist.

Vorteilhaft ist dabei, dass der Aufstell- und Abladevorgang dadurch vereinfachbar ist, dass bei Verwendung eines semi-low loader trailers mit einer Plattform oder Ladefläche mit hydraulischer Hebefunktion beziehungsweise mit hydraulischer Höhenverstellung auf den Einsatz eines mobilen Schwerlastkrans verzichtet wird, indem der das jeweilige Betriebsmittel, insbesondere der Transformator, mittels des Trailers zum Aufstellort verbracht wird, die Ladefläche, zunächst soweit angehoben wird dass die Haltemittel über den Lastaufnehmern frei beweglich sind und über diesen positionierbar sind und nach Ausrichtung der Haltemittel über den Lastaufnehmern, insbesondere nach zentrischer Ausrichtung die Ladefläche derart abgesenkt wird, dass die Haltemittel und damit das Betriebsmittel in Endlage auf den Lastaufnehmern ruhen. Die Ladefläche wird dann weiter abgesenkt bis der Trailer und/oder die Ladefläche unter dem Transformator freigängig bewegbar beziehungsweise verfahrbar und von diesem wegbewegbar ist.

Vorteilhaft sind die Lastaufnehmer dabei auf einem die Last des elektrischen Betriebsmittels tragenden Fundament, insbesondere einem Betonfundament, angeordnet.

In einer weiteren Ausgestaltung ist jeweils zwischen Lastaufnehmer und Fundament und/oder zwischen Lastaufnehmer und Haltemittel wenigstens ein Dämpfungselement beziehungsweise Schwingungsdämpfer und/oder eine anti-vibrations Unterlage, vorgesehen.

In einer weiteren Ausgestaltung umfasst die Betriebsmitteltraganordung wenigstens vier am Betriebsmittel angeordnete Haltemittel, welche insbesondere gleichverteilt oder symmetrisch an dem jeweiligen Betriebsmittel mittels Verschweißung, Vernietung, mittels Bolzen und/oder Verschraubung und/oder Verrastung befestigt, insbesondere beschädigungsfrei lösbar befestigt sind.

Vorteilhaft ist dabei weiterhin vorsehbar, dass die Haltemittel am Betriebsmittel höhenverstellbar und/oder vertikal verstellbar, beispielsweise entlang einer Führung oder Führungsschiene, angeordnet sind.

Auch ist vorsehbar, dass die Führung Bohrungen zum Durchgriff von Bolzen und oder Schrauben zur Befestigung des jeweiligen Haltemittels aufweist.

Weiterhin beansprucht wird ein entsprechendes Aufstellverfahren für ein elektrisches Betriebsmittel mittels der vorbeschriebenen Betriebsmitteltraganordnung sowie die Verwendung von Lastaufnehmern für das Aufstellen eines elektrischen Betriebsmittels, insbesondere eines Transformators oder Leistungstransformators.

Die weitere Darlegung der Erfindung sowie vorteilhafter Ausgestaltungen und Weiterbildungen erfolgt anhand einiger Figuren und Ausführungsbeispiele.

Es zeigen:
- Fig. 1: Beispielhaft ausgebildete Betriebsmitteltraganordnung mit Transformator und Tieflader
- Fig. 2: Beispielhaft ausgebildete Betriebsmitteltraganordnung mit abgesetztem Transformator
- Fig. 3: Beispielhaft ausgebildete Betriebsmitteltraganordnung mit abgesetztem Transformator in Seitenansicht
- Fig. 4: Beispielhaft ausgebildete Betriebsmitteltraganordnung mit abgesetztem Transformator in Draufsicht
- Fig. 5: Beispielhaft ausgebildete Betriebsmitteltraganordnung mit Haltemitteln und Lastaufnehmern

In Fig . 1 ist eine beispielhaft ausgebildete Betriebsmitteltraganordnung für einen Transformator 2 gezeigt, welche vier am Betriebsmittel, hier dem Transformator, selbst angeordnete Haltemittel 3a,b,c,d, sowie eine Stützanordnung mit vier Lastaufnehmern 4a,b,c,d, sog. "load stabilizers", insbesondere vier säulenartig ausgebildete Stützfüße oder Absetzdosen, auch als Elefantenfüße bezeichnet, umfasst. Die hier beispielhaft gezeigten als Absetzdosen ausgebildeten Lastaufnehmer 4a,b,c,d sind aus Stahl gebildet und haben eine zylindrische Form mit einem Durchmesser von ca. 1m und einer Höhe von ca. 1,3 m.

Jede der hier beispielhaft gezeigten Absetzdosen ist für eine Belastung von bis zu ca. 35t ausgelegt. Die Dimensionierung hängt dabei jedoch letztlich von der zu tragenden Last des jeweiligen Betriebsmittels, im hier gezeigten Fall des Transformators ab. Demgemäß sind auch Absatzdosen mit einer größeren Traglast ausbildbar.

Unter die jeweiligen Lastaufnehmer beziehungsweise Absetzdosen ist eine vergleichsweise große, wenige Zentimeter dicke Stahlplatte 5 legbar, um die Lasten des aufzunehmenden Betriebsmittels besser auf dem Boden zu verteilen.

In Endlage beziehungsweise Endposition ist das jeweilige elektrische Betriebsmittel, insbesondere der Transformator in Endposition mit den Haltemitteln 3a,b,c,d auf den Lastaufnehmern 4a,b,c,d abgesetzt und/oder ruht nach dem Absetzen zumindest teilbereichsweise zwischen den Lastaufnehmern 4a,b,c,d und/oder ist zwischen ihnen angeordnet.

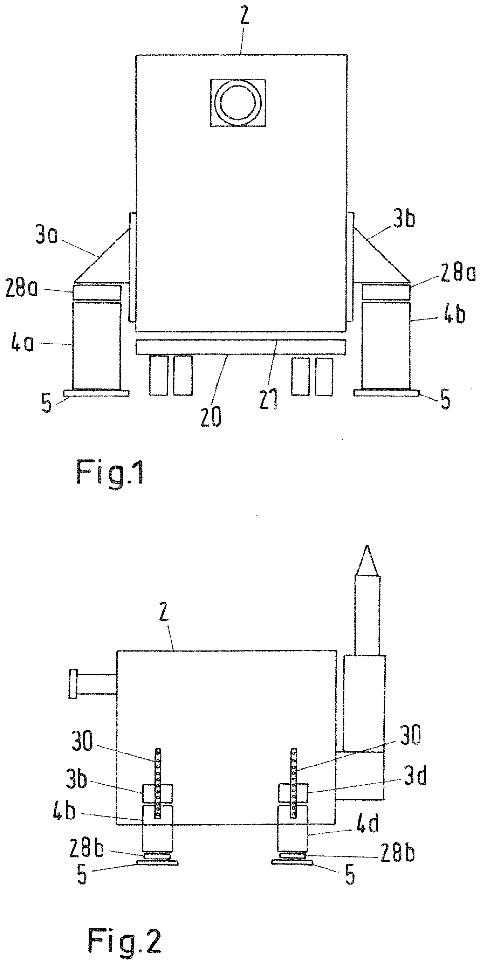

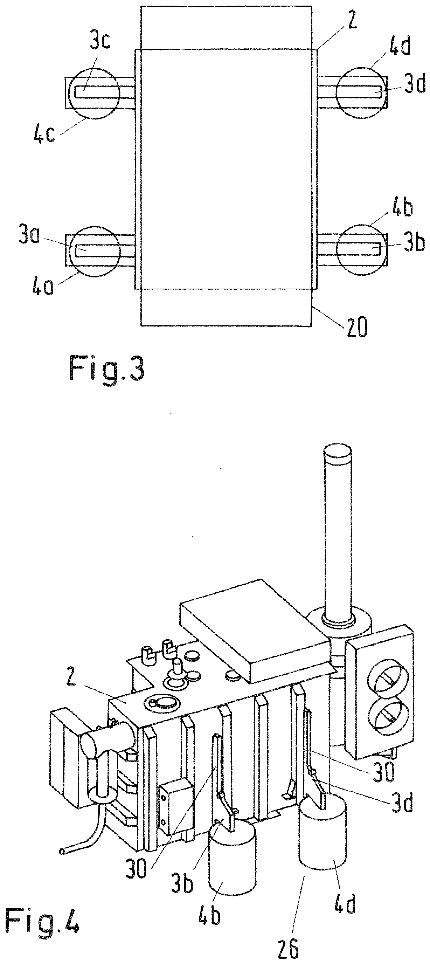

Der Aufstell- und Abladevorgang wird dabei dadurch vereinfacht, dass bei Verwendung eines semi-low loader trailers 20, wie in Fig. 1 und 3 gezeigt, mit einer Plattform oder Ladefläche 21 mit hydraulischer Hebefunktion beziehungsweise mit hydraulischer Höhenverstellung auf den Einsatz eines mobilen Schwerlastkrans verzichtet wird, indem der Transformator 2, der mit seiner Bodenfläche beziehungsweise Unterseite auf der Ladefläche des Trailers 20 abgestellt ist und mittels des Trailers 20 zum Aufstellort verbracht wird. Die Ladefläche 21 ist beziehungsweise wird zunächst soweit angehoben, so dass die Haltemittel 3a,b,c,d über den Lastaufnehmern 4a,b,c,d frei beweglich sind und über diesen positionierbar sind und nach Ausrichtung der Haltemittel 3a,b,c,d über den Lastaufnehmern 4a,b,c,d, insbesondere nach zentrischer Ausrichtung, siehe auch Fig. 3 , die Ladefläche 21 derart abgesenkt wird, dass die Haltemittel und damit der Transformator 2 in Endlage auf den Lastaufnehmern 4a,b,c,d ruhen. Die Ladefläche 21 wird dann weiter abgesenkt bis der Trailer 20 und/oder die Ladefläche 21 unter dem Transformator 2 freigängig bewegbar beziehungsweise verfahrbar und von diesem wegbewegbar ist.

Die Lastaufnehmer 4a,b,c,d sind dabei auf einem die Last des Transformators 2 tragenden Fundament, insbesondere einem Betonfundament, angeordnet.

Auch ist, wie in Figur 1 gezeigt, jeweils zwischen Lastaufnehmer 4a,b,c,d und einem die Last des elektrischen Betriebsmittels tragenden Fundament und/oder zwischen Lastaufnehmer 4a,b,c,d und Haltemittel 3a,b,c,d jeweils wenigstens ein Dämpfungselement beziehungsweise Schwingungsdämpfer und/oder anti-vibrations Unterlage 28a,b, vorgesehen.

Die Betriebsmitteltraganordung umfasst, wie in Fig. 3 angegeben, wenigstens vier am Betriebsmittel angeordnete Haltemittel 3a,b,c,d welche insbesondere gleichverteilt oder symmetrisch an dem jeweiligen Betriebsmittel mittels Bolzen und/oder Verschraubung lösbar befestigt sind.

Die Haltemittel 3a,b,c,d sind, wie in Fig. 2 entnehmbar, am Transformator 2 höhenverstellbar und/oder vertikal verstellbar entlang einer Führung 30 oder Führungsschiene, angeordnet.

Die Führung kann dabei in vertikaler Längsrichtung angeordnete Bohrungen zum Durchgriff von Bolzen und oder Schrauben zur Befestigung des jeweiligen Haltemittels aufweisen.

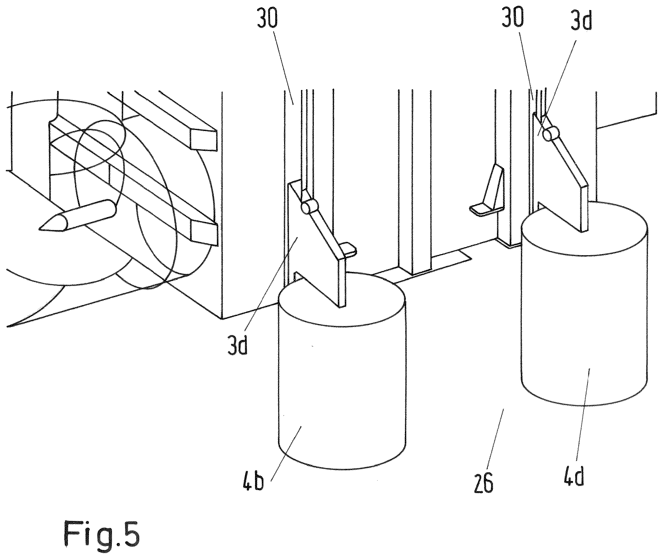

Die Absetzdosen werden mit den Haltemitteln 3a,b,c,d , welche im hier gezeigten der Figuren 4 und 5 als Anhebeplatten ausgebildet sind, verschraubt, um sicherzustellen, dass diese nicht im Betrieb durch die Vibrationen des Trafos verrutschen oder ihre Position verändern. Vorgenannte Verschraubung ist in den Figuren nicht explizit gezeigt.

Die als Anhebeplatten ausgebildeten Haltemittel 3a,b,c,d umfassen dabei zwei parallele senkrechte Stahlplatten, die mit einer waagerecht ausgerichteten Stahlplatte verbunden ist, insbesondere verschraubt ist, die in Endlage wiederum auf den Lastaufnehmern 4a,b,c,d beziehungsweise Absetzdosen aufliegt.

Die jeweiligen Haltemittel 3a,b,c,d beziehungsweise Anhebeplatten wiederum können mit dem Transformator 2 an eine Lochleiste 6 verschraubt werden, wobei die Lochleiste 6 eine flexible Höheneinstellung des Systems gewährleistet.

## Patentansprüche

1. Betriebsmitteltraganordnung zur Aufstellung eines elektrischen Betriebsmittels (2), insbesondere eines Transformators oder Leistungstransformators, umfassend mehrere am elektrischen Betriebsmittel (2) selbst lösbar seitlich anordnenbare Haltemittel (3a,b,c,d), sowie eine Stützanordnung mit mehreren Lastaufnehmern (4a,b,c,d), insbesondere vier säulenartig ausgebildete Stützfüße, wobei die Lastaufnehmer (4a,b,c,d) an einem für das Betriebsmittel (2) vorgesehenen Installations- oder Ablageort angeordnet sind und die Haltemittel (3a,b,c,d) und die Lastaufnehmer (4a,b,c,d) derart ausgebildet sind, dass, wenn das Betriebsmittel (2) mittels eines Trailers (20) zum Aufstellort verbracht wird, eine Ladefläche (21) des Trailers (20) zunächst soweit angehoben wird, dass die Haltemittel (3a,b,c,d) über den Lastaufnehmern (4a,b,c,d) frei beweglich und über diesen positionierbar sind und nach Ausrichtung der Haltemittel (3a,b,c,d) über den Lastaufnehmern (4a,b,c,d), die Ladefläche (21) derart abgesenkt wird, dass die Haltemittel (3a,b,c,d) und damit das Betriebsmittel (2) in Endlage auf den Lastaufnehmern (4a,b,c,d) ruhen, sodass, wenn die Ladefläche (21) dann weiter abgesenkt wird, der Trailer (20) und/oder die Ladefläche (21) unter dem Betriebsmittel (2) freigängig bewegbar beziehungsweise verfahrbar und unter diesem wegbewegbar ist.

2. Betriebsmitteltraganordnung nach Anspruch 1, **dadurch gekennzeichnet, dass** die Lastaufnehmer (4a,b,c,d) ferner dazu eingerichtet sind, auf einem die Last des elektrischen Betriebsmittels tragenden Fundament, insbesondere einem Betonfundament, angeordnet zu werden.

3. Betriebsmitteltraganordnung nach einem der Ansprüche 1 oder 2, **dadurch gekennzeichnet, dass** zwischen Lastaufnehmer (4a,b,c,d) und einem für die Lastaufnehmer (4a,b,c,d) vorgesehenen Fundament und/oder zwischen Lastaufnehmer (4a,b,c,d) und Haltemittel (3a,b,c,d) wenigstens ein Dämpfungselement (28a, 28b) beziehungsweise Schwingungsdämpfer (28a, 28b) und/oder eine Antivibrationsunterlage (28a, 28b) anordenbar ist.

4. Betriebsmitteltraganordnung nach einem der vorherigen Ansprüche, **dadurch gekennzeichnet, dass** wenigstens vier Haltemittel (3a,b,c,d) am vorgesehenen Betriebsmittel (2) insbesondere gleichverteilt oder symmetrisch beschädigungsfrei lösbar befestigbar und höhenverstellbar und/oder vertikal versetzbar sind.

5. Betriebsmitteltraganordnung nach einem der vorherigen Ansprüche, **dadurch gekennzeichnet, dass** die Haltemittel (3a,b,c,d) als Anhebeplatten ausgebildet sind, und jeweils zwei parallele senkrechte Stahlplatten aufweisen, die mit einer waagerecht ausgerichteten Stahlplatte (5) verbunden sind.

6. Verfahren zur Aufstellung eines elektrischen Betriebsmittels (2) mittels der Betriebsmitteltraganordnung nach einem der Ansprüche 1 bis 5, wobei unter Verwendung eines semi-low loader trailers oder Tiefladers (20) mit einer Plattform oder Ladefläche (21) mit hydraulischer Hebefunktion beziehungsweise mit hydraulischer Höhenverstellung auf den Einsatz eines mobilen Schwerlastkrans verzichtet wird, indem das jeweilige Betriebsmittel (2), insbesondere der Transformator, mittels des Trailers (20) zum Aufstellort verbracht wird, die Ladefläche, zunächst soweit angehoben wird dass die Haltemittel (3a,b,c,d) über den Lastaufnehmern (4a,b,c,d) der Betriebsmitteltraganordnung frei beweglich sind und über diesen positionierbar sind und nach Ausrichtung der Haltemittel (3a,b,c,d) über den Lastaufnehmern (4a,b,c,d), die Ladefläche derart abgesenkt wird, dass die Haltemittel (3a,b,c,d) und damit das Betriebsmittel (2) in Endlage auf den Lastaufnehmern (4a,b,c,d) ruhen, wobei die Ladefläche (21) dann weiter abgesenkt wird bis der Trailer (20) und/oder die Ladefläche unter dem Betriebsmittel (2) freigängig bewegbar beziehungsweise verfahrbar und unter diesem wegbewegbar ist.

7. Verwendung von Lastaufnehmern (4a,b,c,d), insbesondere Absetzdosen, zum Aufstellen eines Transformators oder Leistungstransformators in dem Verfahren nach Anspruch 6.

## Claims

1. Equipment support assembly for setting up electrical equipment (2), in particular a transformer or power transformer, comprising a plurality of holding means (3a, b, c, d) that can be detachably arranged on the side of the electrical equipment (2) itself, and a supporting arrangement having a plurality of load receivers (4a, b, c, d), in particular four supporting feet formed in the manner of columns, wherein the load receivers (4a, b, c, d) are arranged in an installation or erection location provided for the equipment (2), and the holding means (3a, b, c, d) and the load receivers (4a, b, c, d) are formed in such a way that if the equipment (2) is moved to the erection location by means of a trailer (20), a loading area (21) of the trailer (20) is firstly raised to such an extent that the holding means (3a, b, c, d) are freely movable over the load receivers (4a, b, c, d) and can be positioned above the latter and, after the holding means (3a, b, c, d) have been aligned over the load receivers (4a, b, c, d), the loading area (21) is lowered in such a way that the holding means (3a, b, c, d) and therefore the equipment (2) rests in the final position on the load receivers (4a, b, c, d) so that when the loading area (21) is then lowered further, the trailer (20) and/or the loading area (21) is freely movable or displaceable under the equipment (2) and can be moved away under the latter.

2. Equipment support assembly according to Claim 1, **characterized in that** the load receivers (4a, b, c, d) are further set up to be arranged on a foundation supporting the load of the electrical equipment, in particular a concrete foundation.

3. Equipment support assembly according to either of Claims 1 and 2, **characterized in that** at least one damping element (28a, 28b) or vibration damper (28a, 28b) and/or an anti-vibration base (28a, 28b) can be arranged between the load receivers (4a, b, c, d) and a foundation provided for the load receivers (4a, b, c, d) and/or between the load receivers (4a, b, c, d) and the holding means (3a, b, c, d).

4. Equipment support assembly according to one of the preceding claims, **characterized in that** at least four holding means (3a, b, c, d) can be attached detachably to the equipment (2) provided, in particular distributed equally or symmetrically without damage, and are vertically adjustable and/or vertically displaceable.

5. Equipment support assembly according to one of the preceding claims, **characterized in that** the holding means (3a, b, c, d) are formed as lifting plates and each have two parallel vertical steel plates which are connected to a horizontally aligned steel plate (5).

6. Method for setting up electrical equipment (2) by means of the equipment support assembly according to one of Claims 1 to 5, wherein, by using a semi-low loader trailer or low-loader (20) having a platform or loading area (21) with a hydraulic lifting function or with hydraulic height adjustment, the use of a mobile heavy crane is dispensed with, in that the respective equipment (2), in particular the transformer, is moved to the erection location by means of the trailer (20), the loading area is firstly raised to such an extent that the holding means (3a, b, c, d) are freely movable over the load receivers (4a, b, c, d) of the equipment support assembly and can be positioned above the latter and, after the holding means (3a, b, c, d) have been aligned above the load receivers (4a, b, c, d), the loading area is lowered in such a way that the holding means (3a, b, c, d) and therefore the equipment (2) rest in the final position on the load receivers (4a, b, c, d), wherein the loading area (21) is then lowered further until the trailer (20) and/or the loading area is freely movable or displaceable under the equipment (2) and can be moved away under the latter.

7. Use of load receivers (4a, b, c, d), in particular load stabilizers, for setting up a transformer or a power transformer in the method according to Claim 6.

## Revendications

1. Ensemble de support d'équipement destiné à mettre en place un équipement électrique (2), en particulier un transformateur ou un transformateur de puissance, ledit ensemble comprenant une pluralité de moyens de retenue (3a, b, c, d), qui peuvent être disposés latéralement de manière amovible sur l'équipement électrique (2), et un ensemble de support comprenant une pluralité de récepteurs de charge (4a, b, c, d), en particulier quatre pieds de support en forme de colonne, les récepteurs de charge (4a, b, c, d) étant disposés sur un site d'installation ou de stockage prévu pour l'équipement (2) et les moyens de retenue (3a, b, c, d) et les récepteurs de charge (4a, b, c, d) étant conçus de manière à ce que, lorsque l'équipement (2) est amené sur le site d'installation au moyen d'une remorque (20), une surface de chargement (21) de la remorque (20) soit d'abord élevée jusqu'à ce que les moyens de retenue (3a, b, c, d) soient mobiles librement sur les récepteurs de charge (4a, b, c, d) et soient positionnés sur eux et, après avoir orienté les moyens de retenue (3a, b, c, d) sur les récepteurs de chargement (4a, b, c, d), la surface de chargement (21) soit abaissée de manière à ce que les moyens de retenue (3a, b, c, d) et donc l'équipement (2) reposent sur les récepteurs de chargement (4a, b, c, d) dans la position finale de sorte que, lorsque la surface de chargement (21) est encore abaissée, la remorque (20) et/ou la surface de chargement (21) soient mobiles ou puissent être déplacées librement sous l'équipement (2) et puissent être éloignées au-dessous de celui-ci.

2. Ensemble de support d'équipement selon la revendication 1, **caractérisé en ce que** les récepteurs de charge (4a, b, c, d) sont également conçus pour être disposés sur une semelle portant la charge de l'équipement électrique, notamment une semelle en béton.

3. Ensemble de support d'équipement selon l'une des revendications 1 et 2, **caractérisé en ce qu'**au moins un élément amortisseur (28a, 28b) ou un amortisseur de vibrations (28a, 28b) et/ou une embase anti-vibrations (28a, 28b) peuvent être disposés entre le récepteur de charge (4a, b, c, d) et une semelle prévue pour les récepteurs de charge (4a, b, c, d) et/ou entre le récepteur de charge (4a, b, c, d) et le moyen de retenue (3a, b, c, d).

4. Ensemble de support d'équipement selon l'une des revendications précédentes, **caractérisé en ce qu'**au moins quatre moyens de retenue (3a, b, c, d) peuvent être fixés et réglés en hauteur et/ou déplacés verticalement de manière amovible sur l'équipement prévu (2) notamment de manière régulièrement répartie ou symétriquement sans dommage.

5. Ensemble de support d'équipement selon l'une des revendications précédentes, **caractérisé en ce que** les moyens de retenue (3a, b, c, d) sont conçus comme des plaques de levage et comportent chacun deux plaques en acier verticales parallèles qui sont reliées à une plaque en acier (5) orientées horizontalement.

6. Procédé de mise en place d'un équipement électrique (2) au moyen de l'ensemble de support d'équipement selon l'une des revendications 1 à 5, l'utilisation d'une remorque de type à chargeur semibas ou d'une remorque surbaissée (20) comprenant une plate-forme ou une surface de chargement (21) ayant une fonction de levage hydraulique ou un réglage en hauteur hydraulique permettant de se passer de l'utilisation d'une grue mobile pour charges lourdes car l'équipement respectif (2), notamment le transformateur, est amené sur le site d'installation au moyen de la remorque (20), la zone de chargement est d'abord relevée jusqu'à ce que les moyens de retenue (3a, b, c, d) soient mobiles librement sur les récepteurs de charge (4a, b, c, d) de l'ensemble de support d'équipement et puissent être positionnés sur eux et, après avoir orienté les moyens de retenue (3a, b, c, d) sur les récepteurs de charge (4a, b, c, d), la surface de chargement est abaissée de manière à ce que les moyens de retenue (3a, b, c, d) et donc l'équipement (2) reposent sur les récepteurs de charge (4a, b, c, d) en position finale, la surface de chargement (21) étant ensuite davantage abaissée jusque ce que la remorque (20) et/ou la surface de chargement soient mobiles ou puissent être déplacées librement sous l'équipement (2) et éloignées sous celui-ci.

7. Utilisation de récepteurs de charge (4a, b, c, d), notamment de boîtiers d'abaissement, destinés à la mise en place d'un transformateur ou d'un transformateur de puissance dans le procédé selon la revendication 6.
